# EUROPEAN PATENT APPLICATION

(11) **EP 1 209 025 A1**
(43) Date of publication of application: **29.05.2002**
(21) Application number: 01127279.6
(22) Date of filing: 16.11.2001
(51) Int. Cl.: B60N 2/427, B60N 2/28

(54) **Safety device for car seat**

(30) Priority: 18.11.2000 KR 2000068719
(71) Applicant: Yoshida, Toshiya, Tokyo (JP); Yoshida, Toshihiko, Tokyo (JP); Choi, Moon-ho, Kangnam-ku, Seoul (KR)
(72) Inventor: Yoshida, Toshiya, Tokyo (JP); Yoshida, Toshihiko, Tokyo (JP)
(74) Representative: Patentanwälte Hauck, Graalfs, Wehnert, Döring, Siemons

(57) **Abstract**

The object of the present invention is to provide a safety device for a car seat which lies down instantaneously and converts an infant, a child, or an old person into a safe stance, reacting due to an impact given in a front/rear collision, so as to protect the infant, child or old person safely against the impact in the front/rear collision. To achieve this object, the present invention comprises a seat for an infant/child installed on a conventional car seat and lying down by reacting to the impact and sliding forward, a locking member maintaining a normal stance of the seat for the infant/child, and an impact reaction member releasing a locking between the seat for the infant/child and the locking member as the impact occurs. Therefore, by having the seat for infant/child lain down against the transmitted impact in the front/rear collision, the danger from the impact could be avoided, and thus the infant, child or old person could be protected more safely.

## Description

### BACKGROUND OF THE INVENTION

### Field of the Invention

The present invention relates to a safety device for car seat for protecting passengers, especially an infant, a child, or an old person in a front/rear collision of a car, more specifically the safety device for car seat for protecting the infant, child or old person safely against an impact in the front/rear collision by lying down instantaneously and converting into a safe stance, reacting with the impact in the front/rear collision.

### Background of the Related Art

Generally, a safety device, that is a seat for infants, which protects infant or child against an impact in a front/rear collision of a car, is proposed in various types. However, since most of the seats for infant are merely manufactured to be suitable to the body shape of the infant and mounted tightly on the car seat, they are poor in respect of protection against the impact.

Considering this, the inventor has proposed a safety device for seat improving a conventional seat for infants as Japanese Patent Application No. H07-335204. However, this safety device has a defect that little dislocation occurs in operation and the impact is given on the head, neck, breast and the like, due to the force and moment of inertia produced during this dislocation.

### SUMMARY OF THE INVENTION

The present invention is contemplated to solve the aforementioned problem, and it is an object of the present invention to provide a safety device for car seat which lies down instantaneously and converts an infant, a child, or an old person into a safe stance, by an impact given in a front/rear collision of car, so as to protect the infant, child or old person safely against the danger from the impact in the front/rear collision.

To accomplish the above object, the present invention provides a safe device for car seat comprising: a seat for infant/child installed on a conventional car seat and lying down with sliding forward by reacting to the impact; a locking member maintaining a normal stance of the seat for infant/child; and a impact reaction member releasing a locking between the seat for infant/child and the locking member as the impact occurs. Therefore, by having the seat for infant/child lain down against the transmitted impact in the front/rear collision, the danger from the impact could be avoided, and thus the infant, child or old person could be protected more safely.

### BRIEF DESCRIPTION OF THE DRAWINGS

The features and advantages of the present invention will be more described specifically in the following description of preferred embodiments of the invention with reference to the accompanying drawings wherein:
FIG. 1 is a side elevation view showing one embodiment of a safety device for seat according to the present invention;
FIG. 2 is a partially enlarged sectional view of FIG. 1;
FIG. 3 is a partially enlarged sectional view showing modification of FIG. 2;
FIG. 4 is a side elevation view showing another embodiment of a safety device for seat according to the present invention;
FIG. 5 is a side elevation view showing a status in use of the embodiment shown in FIG. 4;
FIG. 6 is a side elevation view showing a status in operation of the embodiments shown in FIG. 5;
FIG. 7 is a side elevation view showing still another embodiment of a safety device for seat according to the present invention; and
FIG. 8 is a side elevation view showing a status in operation of the embodiment in FIG. 7.

### DETAILED DESCRIPTION OF THE PREFERRED EMBODIMENT

Reference will now be made in detail to the preferred embodiments of the present invention, examples of which are illustrated in the accompanying drawings. In explaining the present invention, the same names and reference numerals will be given to the same components, and explanations in the same will be omitted.

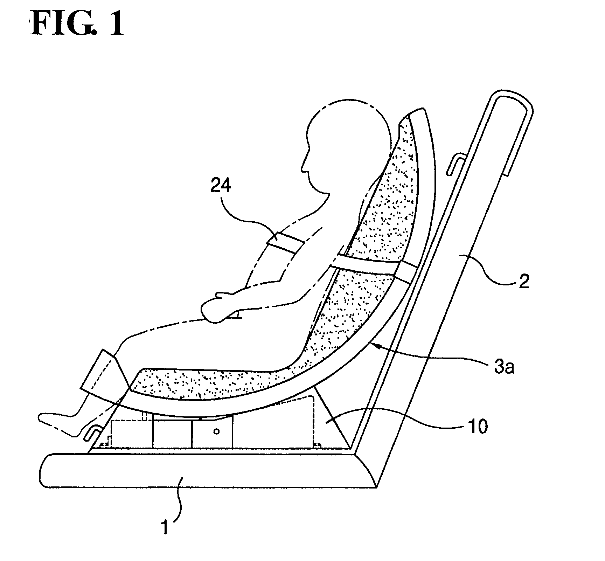

FIG. 1 illustrates one embodiment of a safety device for seat according to the present invention.

As shown in FIG. 1, a seat stand 10 is formed on a car seat 1, and a seat for infant and child 3a is installed slidable on the seat stand 10.

A reference numeral 2 indicates a back of the car seat 1, and a reference numeral 24 indicates a safety belt.

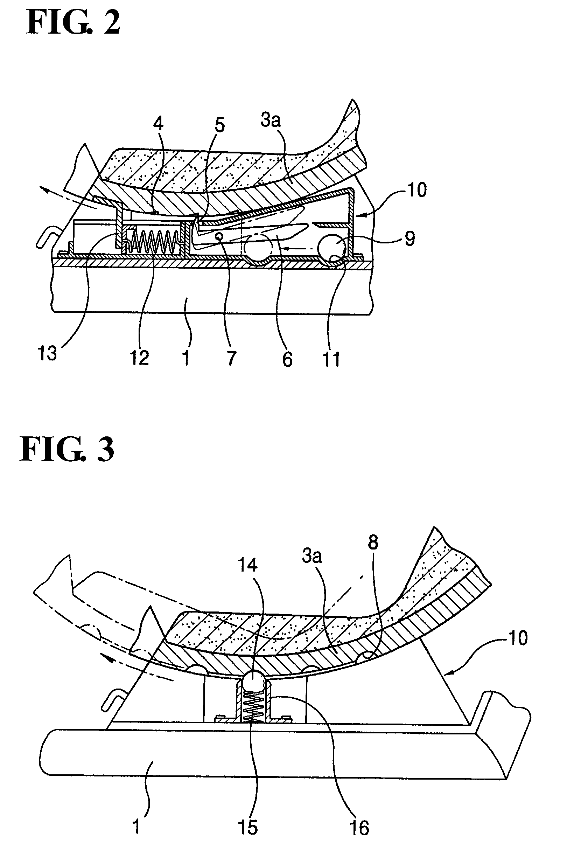

As shown in FIG. 2, for the normal use of the seat for infant/child 3a, a plurality of ratchet grooves 4 is formed on a bottom surface of the seat for infant/child 3a, and a ratchet lever 6 which could be rotated about a pin 7 and engaged with an one of the ratchet grooves 4 using a ratchet projection 5 formed at one end thereof, is installed in the seat stand 10.

A pin-installed position in the ratchet lever 6 locates close to the end having the ratchet projection 5 so as to allow the ratchet lever 6 to maintain the self-locking.

Therefore, the seat for infant/child 3a is in the normal stance and enables the normal usage, with maintaining a locking status by using an engaging structure of the ratchet lever 6.

As means for releasing the seat for infant/child 3a from the locking using impact force in the front/rear collision of the car, an impact reaction ball 9 is used.

The impact reaction ball 9 locates in a ball seat 11 provided to a rear portion in the seat stand 10.

As means for assisting the sliding movement of the seat for infant/child 3a, a compression spring 12 that is disposed to a front portion in the seat stand 10, is used. A bracket 13 is formed downwardly at a front portion of the bottom surface of the infant/children seat 3a and is connected with a front end of the compression spring 12, in order to use the elastic force of the compression spring 12.

In normal use of the seat for infant/child 3a, the spring 12 is maintained to be compressed.

Accordingly, the impact reaction ball 9 moves forwardly due to the inertia force by the impact in the front/rear collision and pushes a rear end of the ratchet lever 6 upward. Then, the ratchet projection 5 is disengaged with the ratchet groove 4 while the ratchet lever 6 is pulled back, and simultaneously the seat for infant/child 3a is moved forward forcibly by the elastic force of the compression spring 12.

Since the seat for infant/child 3a lies down with being moved forward as such, infant or child seated thereon is not affected by the impact.

FIG. 3 illustrates the locking operation between ball and spring for maintaining the normal stance of the seat for infant/child 3a.

A plurality of ball-engaging grooves 8 are formed with constant mutual distance on the bottom surface of the seat for infant/child 3a, In the seat stand 10, installed are a locking ball 14/locking spring 15 providing the vertical elastic force and a housing 16 receiving the locking ball 14/locking spring 15 therein.

Therefore, with the elastic force of the locking spring 15 and the engagement of the locking ball 14 with a one of the ball-engaging grooves 8, the seat for infant/child 3a maintains the normal stance. In addition, when the impact is given in the front/rear collision, the locking ball 14 leaves the ball-engaging groove 8, and at the same time the seat for infant/child 3a lies down with moving forward, so that infant or child is protected from the impact.

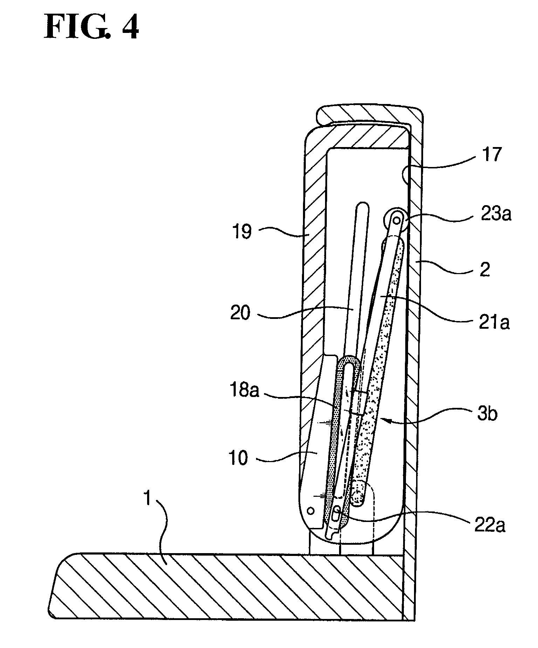

FIG. 4 illustrates another embodiment of a safety device for seat according to the present invention.

As shown in FIG. 4, a seat-receiving space 17 that a front portion thereof is opened, is formed in the back 2 of the car seat, and a seat for infant/child 3b is installed in the seat-receiving space 17.

The seat for infant/child 3b is unfolded on the seat 1 when in use and is stored in the back 2 when not in use.

When the seat for infant/child 3b is stored, the seat 1 could be used normally.

The seat for infant/child 3b comprises a back member 21a having a roller 23a at an upper end thereof and a stand member 18a connected with the back member 21a by a shaft 22a. The stand member 18a could slide in grooves 20 formed in both sidewalls, with being putting on the seat stand 10 of a seat body 19.

The back member 21a and stand member 18a become close or away each other about a shaft-connected portion, and thereby infant or child lies down naturally together with the seat 3b in its forward movement.

The seat stand 10 and stand member 18a are disposed to be inclined, so as to maintain the stance of the seat for infant/child 3b normally when the external force does not act thereon.

That is, by allowing a front portion of the seat for infant/child 3b to be higher than a rear portion, the center of gravity of infant or child locates in the rear and the forward movement of the seat 3b is prevented.

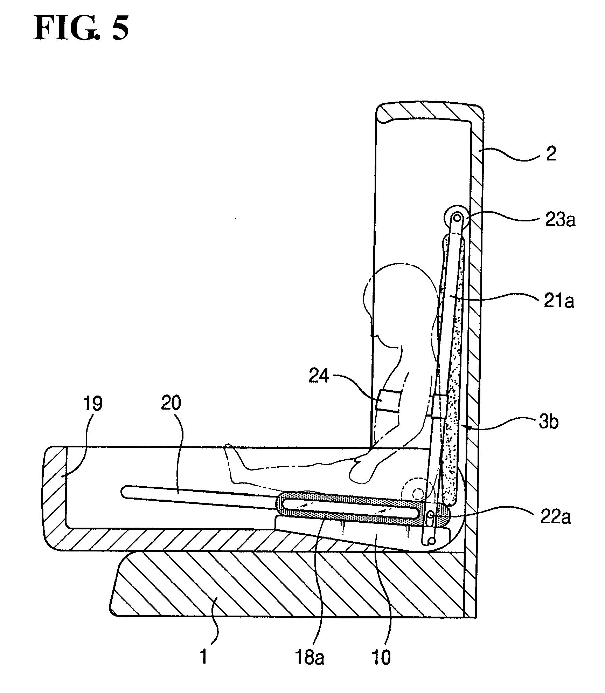

As shown in FIG. 5, when the seat for infant/child 3b is used normally, infant or child could be seated safely on the stand member 18a and the back member 21a, fastened with a safety belt 24, and the seat body 19 locates in front of the infant or child as a protection means so that the body, especially the legs of the infant and child are prevented from contacting directly with the inside of the car.

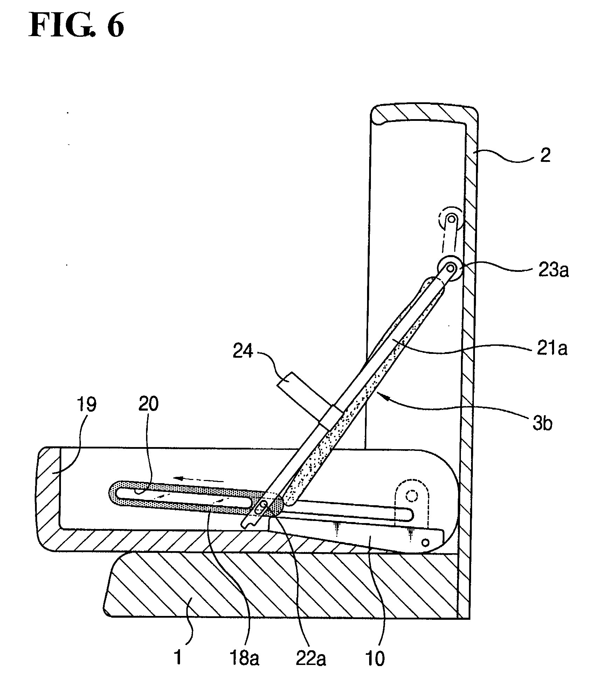

As shown in FIG. 6, when the impact is given, the body of infant or child inclines forward due to the reaction force, the stand member 18a slides forward using sliding structure, and at the same time the back member 21a slide down along the back 2 using the roller 23a.

According to this movement of the stand member 18a and back member 21a, the seat for infant/child 3b lies down entirely and guides the infant and child into the safe stance for the impact.

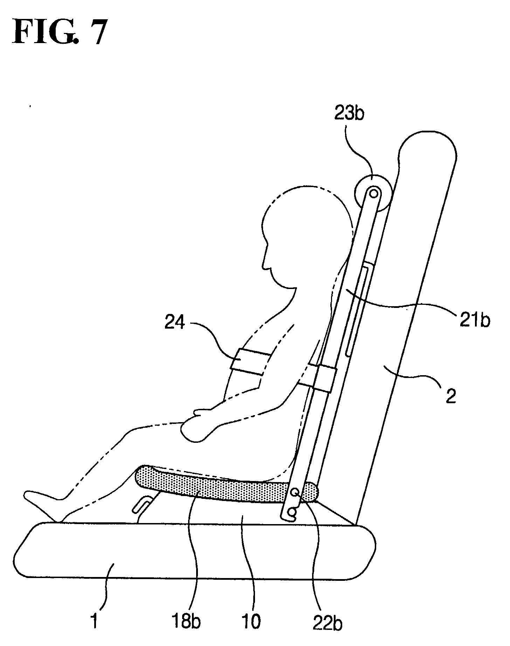

FIG. 7 illustrates still another embodiment of a safety device for seat according to the present invention.

The embodiment in FIG. 7 provides the structure simpler than that of the embodiment in FIG. 4, having an identical effect.

In a seat for infant/child 3c, a stand member 18b and a back member 21b are connected by a shaft 22b and a roller 23b is installed at an upper end of the back member so that each member become close or away in the forward movement of the stand member 18b.

Especially, the forward movement of the stand member 18b is achieved by the direct sliding on the seat stand 10.

For this, an upper surface of seat stand 10 is formed as a gentle concave surface, a front portion thereof is made to be higher that of others, and a bottom surface of the stand member 18b put on the upper surface of the seat stand 10 is made to contact closely thereon.

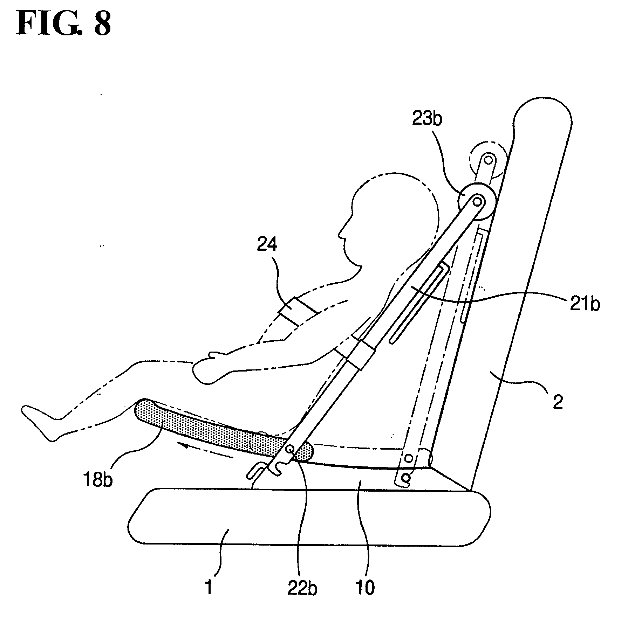

As shown in FIG. 8, when the impact is given in the front/rear collision, the stand member 18b slides forward along the seat stand 10, and at the same time the back member 21b slides down along the back 2 using the roller 23a, increasing a angle regarding the stand member 18b so that the infants and child seat 3c lies down entirely.

Therefore, the infant and child on the infant/children seat 3c is protected safely from the impact.

Although the seat for infant or child is described in the preferred embodiments of the present invention, this could be adapted for an old person.

The effect of the safety device according to the present invention is as follows.

The present invention provides the safety device for car seat that could lie down instantaneously and converting the infant, child or old person into the safe stance, reacting with the impact in the front/rear collision, so that the infant, child or old person could be protected safely from the impact in the front/rear collision.

Although a number of embodiment have described in the above specification, it should be apparent that the present invention could be embodied in many other specific mode included within the sprit and scope of the present invention. Thus, the present embodiments should be considered as illustrative, and the present invention could be modified within the scope of claims and the equivalent thereof.

## Claims

1. A safety device for car seat comprising:
a seat member installed on a conventional car seat and lying down, with sliding forward by a reaction force relative to an impact; and
a locking member maintaining a raised normal stance of the seat member.

2. A device according to claim 1, wherein the seat member includes a back member and a stand member which are connected by a shaft so that it could unfold or fold according to the forward/backward sliding movement of the stand member.

3. A device according to claim 1, wherein the locking member is a ratchet lever being fixed by pin, having a ratchet projection at one end thereof which is engaged with one of ratchet grooves on a bottom surface of the seat member, and releasing a locking with the seat member with a rear end thereof being pushed upward by a impact reaction ball.

4. A device according to claim 2, wherein the seat member includes a seat body which could be pulled forward so as to protect the legs of a person seated thereon.

5. A device according to claim 1, wherein the seat member is installed on a sliding contact surface of a seat stand to be able to slide forward or backward thereon, maintaining a predetermined height from the seat.

6. A device according to claim 2, wherein the seat member is installed on a sliding contact surface of a seat stand to be able to slide forward or backward thereon, maintaining a predetermined height from the seat.

7. A device according to claim 2, wherein a front portion of the stand member is formed to be higher than a rear portion thereof so that the seat member on the stand member maintains the raised normal stance without the locking member.

8. A device according to claim 1, wherein the locking member includes a locking ball engaged with one of ball-engaging grooves on the bottom surface of the seat member, a locking spring providing the locking ball with the vertical elastic force, and a housing receiving the locking ball and locking spring.
